# EUROPÄISCHE PATENTSCHRIFT

(11) **EP 2 181 527 B1**
(45) Veröffentlichungstag und Bekanntmachung des Hinweises auf die Patenterteilung: **22.08.2018**
(21) Anmeldenummer: 08803093.7
(22) Anmeldetag: 19.08.2008
(51) Int. Cl.: H04L 12/40, G05B 19/418

(54) **STEUERKNOTEN FÜR EIN NETZWERK AUS STEUERKNOTEN**
CONTROL NODE FOR A NETWORK OF CONTROL NODES
NOEUD DE COMMANDE POUR UN RÉSEAU CONSTITUÉ DE NOEUDS DE COMMANDE

(30) Priorität: 21.08.2007 DE 102007039427
(43) Veröffentlichungstag der Anmeldung: 05.05.2010
(73) Patentinhaber: Beckhoff Automation GmbH, 33415 Verl (DE)
(72) Erfinder: PAPENFORT, Josef, 32609 Hüllhorst (DE); HEITMANN, Ralf, 33818 Leopoldshöhe (DE); HOPPE, Gerd, 33378 Rheda-Wiedenbrück (DE)
(74) Vertreter: Patentanwaltskanzlei WILHELM & BECK
(86) Internationale Anmeldenummer: PCT/EP2008/060856
(87) Internationale Veröffentlichungsnummer: WO 2009/024575

(56) Entgegenhaltungen:
- WO-A-99/67690
- WO-A-2005/066728
- WO-A2-2005/047991
- DE-A1- 10 309 886
- US-B1- 6 993 042
- LUDWIG WINKEL ED - ANONYMOUS: "Real-Time Ethernet in IEC 61784-2 and IEC 61158 series" INDUSTRIAL INFORMATICS, 2006 IEEE INTERNATIONAL CONFERENCE ON, IEEE, PI, 1. August 2006 (2006-08-01), Seiten 246-250, XP031003359 ISBN: 978-0-7803-9700-2
- FELSER M: "Real-Time Ethernet-Industry Prospective" PROCEEDINGS OF THE IEEE, IEEE. NEW YORK, US, Bd. 93, Nr. 6, 1. Juni 2005 (2005-06-01), Seiten 1118-1129, XP011133107 ISSN: 0018-9219

## Beschreibung

Die Erfindung betrifft einen Steuerknoten für ein Netzwerk aus Steuerknoten und eine Anlage mit solchen Steuerknoten.

Moderne Konzepte für die Industrieautomation beruhen auf der Idee der dezentralen Steuerung. Die auszuführende Steuerungsaufgabe wird geographisch und funktionell optimal auf die Steuerungsknoten der dezentralen Steuerung aufgeteilt. Die Steuerungsknoten kommunizieren dabei untereinander und mit den übergeordneten Systemen über lokale Netzwerke. Durch die dezentrale Steuerung kann der Kommunikationsaufwand reduziert werden, da die einzelnen Steuerungsknoten auf ihre Bereiche bezogene Steuerungsaufgaben selbst übernehmen und nur zur Abstimmung mit den weiteren Steuerknoten bzw. mit den übergeordneten Systemen kommunizieren müssen.

Die dezentrale Steuerung beruht dabei auf der Grundidee, die Automatisierungsaufgabe in einzelne funktionelle und logisch abgeschlossene Module aufzuteilen, die dann prozessnah angeordnet werden können, wodurch sich der Verkabelungs- und Installationsaufwand reduzieren lässt. Durch die Aufteilung in Module kann die Komplexität vermindert werden, sodass sich Funktionen einfacher realisieren lassen.

Das Ethernet-Konzept ist der am weitesten verbreitete Kommunikationsstandard in lokalen Netzwerken (LAN). Das Ethernet basiert auf einem LAN-Aufbau, bei dem eine Mehrzahl von Steuerknoten, z.B. Computer oder Maschinen, über ein gemeinsames Übertragungsmedium miteinander verbunden sind, wobei das Ethernet-Protokoll die Verkapselung der zu übermittelnden Daten in Datenpaketen, im Weiteren auch als Telegramm bezeichnet, mit vorbestimmtem Format vornimmt.

Ethernet-Protokolle werden vornehmlich in Bürokommunikationsnetzwerken eingesetzt. Aufgrund der Vorteile des Ethernet-Konzepts bei der Nutzung von Standard-Hardware- und Standard-Softwarekomponenten sowie der Möglichkeit, bei einfacher Vernetzungstechnologie hohe Datenübertragungsraten zu erreichen, wird die Ethernet-Netzwerkkommunikation zunehmend auch in der industriellen Fertigung zum Datenaustausch zwischen Steuerknoten verwendet.

Bei der Steuerung von Maschinen in der Industrieautomation ist es erforderlich, dass eine zyklische Bearbeitung der Steuerungsaufgabe ohne zeitliche Schwankungen, d.h. mit nur geringen Abweichungen von der gewünschten Zykluszeit im Bereich weniger Mikrosekunden erfolgt, wobei mit einer vorhersehbaren Antwortzeit auf die Regelanforderung reagiert wird. Echtzeitfähigkeit und schnelle Reaktionszeit, wie sie in der Industrieautomation gefordert werden, haben bei Standard-Datenverarbeitungsanwendungen, bei denen Ethernet-Kommunikation üblicherweise eingesetzt wird, jedoch nur eine untergeordnete Bedeutung. Um Echtzeitfähigkeit und schnelle Reaktionszeit beim Einsatz der Ethernet-Kommunikation in der Industrieautomation zu garantieren, sind Verfahren zur Priorisierung von Ethernet-Telegrammen für Echtzeitanwendungen entwickelt worden. Ferner ist mit solchen modernen Datenübertragungsverfahren oft auch eine parallele Nutzung des Netzwerkes für Echtzeitanwendungen und Nicht-Echtzeitanwendungen möglich.

Trotz der zunehmenden Verwendung dezentraler offener Steuerungen, bei denen die Datenübertragung auf der Grundlage des Ethernet-Protokolls ausgeführt wird, und den sich daraus ergebenden Kostenvorteilen besteht in der Industrieautomation weiter das Problem eines Return-of-Investment, vor allem wegen der sich immer weiter verkürzenden Produktlaufzeiten. Neue Produkte werden zwar bereits derart entwickelt, dass sie sich gut automatisch herstellen lassen. Die Automatisierungssysteme zur Fertigung der Produkte sind in der Regel jedoch ganz spezifisch auf das zu fertigende Produkt ausgelegt und lassen sich deshalb nur mit hohem Aufwand an Produkt- und Prozessveränderungen anpassen.

Stand der Technik ist aus der WO99/67690A, LUDWIG WINKEL ED - ANONYMOUS: "Real-Time Ethernet in IEC 61784-2 and IEC 61158 series" INDUSTRIAL INFORMATICS, 2006 IEEE INTERNATIONAL CONFERENCE ON, IEEE, PI, 1. August 2006 (2006-08-01), Seiten 246-250, FELSER M: "Real-Time Ethernet-Industry Prospective" PROCEEDINGS OF THE IEEE, IEEE. NEW YORK, US, Bd. 93, Nr. 6, 1. Juni 2005 (2005-06-01), Seiten 1118-1129, der DE10309886A1 und der WO2005/047991A2 bekannt. Das Dokument WO2005066728 beschreibt einen Steuerknoten im Gebiet der Industrieautomation, wobei die Datenübertragung zwischen den Steuerknoten im Netzwerk in Form von Datenpaketen erfolgt,wobei der Steuerknoten ein Sende-Modul aufweist, das ausgelegt ist, die zu verschickenden Daten in einem Ausgangsprozessabbild zu verwalten, das Ausgangsprozessabbild in ein Datenpaket umzusetzen und das Datenpaket zu einem vorgegebenen Zeitpunkt auf das Netzwerk auszugeben.

Aufgabe der Erfindung ist es, einen Steuerknoten für ein Netzwerk aus Steuerknoten und eine Anlage mit einem solchen Steuerknoten bereitzustellen, die ein flexibles Anlagenmanagement ermöglichen.

Diese Aufgabe wird erfindungsgemäß durch einen Steuerknoten gemäß Anspruch 1 und eine Anlage gemäß Anspruch 9 gelöst. Bevorzugte Weiterbildungen sind in den abhängigen Ansprüchen angegeben.

Erfindungsgemäß weist der Steuerknoten zum Austausch von Daten mit weiteren Steuerknoten im Netzwerk in Form von Datenpaketen ein Sende-Modul auf, das ausgelegt ist, die zu verschickenden Daten in einem Ausgangsprozessabbild zu verwalten, das Ausgangsprozessabbild in ein Datenpaket umzusetzen und das Datenpaket zu einem vorgegebenen Zeitpunkt auf das Netzwerk auszugeben. Ferner weist der Steuerknoten ein Empfangs-Modul auf, das ausgelegt ist, sich auf die Datenpakete eines oder mehrerer Sende-Module von weiteren Steuerknoten anzumelden und ein empfangenes Datenpaket in ein Eingangsprozessabbild umzusetzen.

Die erfindungsgemäße Auslegung des Steuerknotens ermöglicht eine dezentrale Steuerung in Form eines offenen Systems mit einer hohen Kompatibilität und Flexibilität bezüglich der Funktion der Steuerknoten. Alle Steuerknoten weisen nämlich einfache einheitliche Kommunikationsdienste auf, die sich ohne großen Aufwand an gewünschte Produktions- und Fertigungsprozesse anpassen lassen. Das erfindungsgemäße Sende-Empfangs-Kommunikationsmodell ermöglicht es, den Datenverkehr zwischen den Steuerknoten nach außen gegenüber dem Betreiber der Anlage in Form eines einfachen Prozessabbildes darzustellen. Durch die Möglichkeit, dass sich ein Steuerknoten mit Hilfe seines Empfangs-Moduls auf die Datenpakete mehrerer Steuerknoten anmelden kann, lassen sich die Kommunikationsbeziehungen zwischen den Steuerknoten flexibel festlegen, um die gewünschten Prozess- und Fertigungsabläufe in der Anlage durchzuführen.

Gemäß einer bevorzugten Ausführungsform ist das Empfangs-Modul des Steuerknotens ausgelegt, dem empfangenen Datenpaket ein Qualitätsdatum zuzuordnen, das das Alter des Datenpaketes anzeigt. Aus dem zeitlichen Versatz zwischen dem Absenden und dem Eintreffen der Daten kann der Steuerknoten die Qualität der Datenkommunikation ermitteln. Das Anwendungsprogramm im Steuerknoten kann dann auf diesen Qualitätswert reagieren.

Gemäß einer weiteren bevorzugten Ausführungsform kann das Sende-Modul das Datenpaket an einen oder mehrere weitere Steuerknoten direkt adressieren, wobei auf diese Art und Weise vorzugsweise Nicht-Echtzeitdaten azyklisch versandt werden. Alternativ kann das Sende-Modul das Datenpaket jedoch auch an alle am Netzwerk vorhandenen Steuerknoten weiterleiten, wobei hierbei vorzugsweise Echtzeitdaten zyklisch übertragen werden. Mit dieser Auslegung lässt sich eine parallele Datenübertragung von Echtzeitdaten und Nicht-Echtzeitdaten durchführen. Die Echtzeitdaten werden zyklisch auf alle Steuerknoten verteilt, während gegen die Nicht-Echtzeitdaten azyklisch nach Bedarf versandt werden. Die Kommunikationsbeziehungen zwischen den Steuerknoten können so optimal an die Produktions- und Fertigungsbedingungen angepasst werden.

Gemäß einer weiteren bevorzugten Ausführungsform wird die Datenübertragung zwischen Teilnehmern im Steuerknoten in Form von Datenabbildungsvorgängen durchgeführt, wobei jeder Teilnehmer im Steuerknoten ausgelegt ist, direkt auf das zwischen auf den Teilnehmern übertragene Steuerknotenprozessabbild zuzugreifen. Dieser direkte Zugriff bei der internen Datenübertragung im Steuerknoten ermöglicht einen sehr schnellen Datenaustausch mit geringem Protokollaufwand.

Gemäß einer weiteren bevorzugten Ausführungsform ist jeder Teilnehmer im Steuerknoten in eine Organisationseinheit zum Abarbeiten einer Zustandsmaschine, die Betriebsart und Betriebszustand festlegt, und eine Funktionseinheit zum Ausführen des der jeweiligen Zustandsmaschine zugeordneten Anwendungsprogramms unterteilt. Diese Auslegung ermöglicht es, die einzelnen Teilnehmer im Steuerknoten als autarke Module mit einer minimalen Anzahl von Schnittstellen zur Außenwelt auszulegen, wodurch eine verbesserte Dezentralisierung der Steuerung bei gleichzeitig reduzierter Komplexität der Module realisiert werden kann. Die Aufteilung der Teilnehmer in eine Organisationseinheit, die die Zustandsmaschine enthält, und eine Funktionseinheit, die die Anwendungsprogramme ausführt, ermöglicht es, die Teilnehmer beliebig zu konfigurieren und in Beziehungen miteinander zu setzen, was eine vereinfachte Anlagensteuerung und optimale Anpassung an die Fertigungs- und Produktionsabläufe gewährleistet.

Gemäß einer weiteren bevorzugten Ausführungsform umfasst jeder Teilnehmer eine Ereigniserfassungseinheit, die ausgelegt ist, Ereignisse zu klassifizieren und zwischenzuspeichern, und eine Datenerfassungseinheit, die ausgelegt ist, Daten zwischenzuspeichern. Diese Ausgestaltung ermöglicht es, die Schnittstellen zu Außenwelt pro Teilnehmer auf zwei universelle Schnittstellen, nämlich eine für das Ereignislogging und eine für das Datenlogging zu reduzieren.

Gemäß einer weiteren bevorzugten Ausführungsform ist die Ein-/Ausgabe-Einheit der Teilnehmer variabel gestaltet, wobei die Ein-/Ausgabe-Anschlüsse als lokale Variablen mit einer Platzhalteradresse definiert sind, die frei konfigurierbar sind. Diese Vorgehensweise ermöglicht es, ohne komplizierte Hardware- und Softwareänderungen ausführen zu müssen, Prozessabläufe im Steuerknoten an gewünschte Produktions- und Fertigungsabläufe anzupassen.

Gemäß der Erfindung weist die Anlage mit einem Netzwerk aus Steuerknoten einen Netzwerkkonfigurator auf, der ausgelegt ist, die Kommunikationsbeziehung zwischen den Steuerknoten bzw. den Teilnehmern im Steuerknoten festzulegen. Mit dieser Ausgestaltung kann auf einfach Weise auf Produktionserweiterung und Produktionswechsel reagiert werden. Der Netzwerkkonfigurator ermöglicht es nämlich durch einfache Umprogrammierung, entsprechende Anpassungen der Kommunikationsbeziehungen zwischen den einzelnen Steuerknoten bzw. den Teilnehmern im Steuerknoten vorzunehmen.

Die Erfindung wird anhand der beigefügten Zeichnung näher erläutert. Es zeigen:
Fig.1 schematisch ein Netzwerk mit Steuerknoten und Netzwerkkonfigurator;
Fig.2 eine Initialisierungsphase in einem Netzwerk;
Fig.3 eine Steuerknotenarchitektur;
Fig.4 eine Detaildarstellung der in Fig. 3 gezeigten Steuerknotenarchitektur; und
Fig.5 einen Datenaustausch zwischen zwei Steuerknoten mit jeweils zwei Teilnehmern.

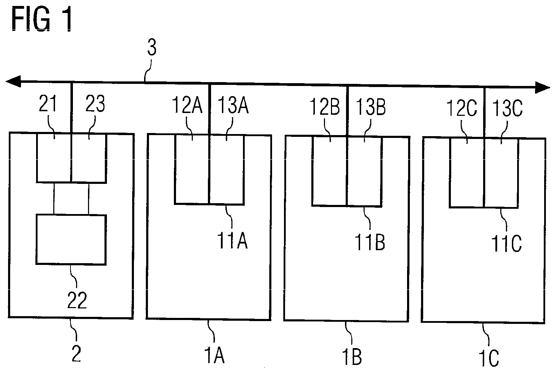

In der Industrieautomation, d.h. der Steuerung und Überwachung von technischen Prozessen mit Hilfe von Software, werden zunehmend dezentrale Steuerungen eingesetzt. Bei der dezentralen Steuerung wird die Steuerungsaufgabe auf Steuerknoten verteilt. Die Steuerknoten kommunizieren dabei untereinander und, wenn erforderlich, mit übergeordneten Systemen über ein industrielles lokales Netzwerk. Fig.1 zeigt eine solche dezentrale Steuerung mit drei Steuerknoten 1A, 1B, 1C und einem Netzwerkkonfigurator 2 zur Konfiguration und Überwachung des Netzwerkes. Die Steuerknoten 1 und der Netzwerkkonfigurator 2 bilden dabei ein lokales Kommunikationsnetz, ein sog. Local Area Network (LAN). LANs sind lokale Kommunikationsnetzwerke, die auf eine geographisches Gebiet begrenzt sind und sich auf einem oder mehreren Servern oder Arbeitsstation, den Steuerknoten, zusammensetzen, die über eine Kommunikationsleitung 3, z.B. ein Twisted-Pair-Kabel oder ein Glasfaserkabel miteinander verbunden sind. Bei den LANs sind verschiedene Netzwerkausgestaltungen möglich, wobei die bekanntesten die Bus-, Ring-, Stern- und Baumstruktur sind. Fig. 1 zeigt die Ausbildung des LANs mit einer Busstruktur.

Wesentliche Anforderung an das LAN beim Einsatz in der Industrieautomation als sog. Feldbussystem ist die Echtzeitfähigkeit. Das Feldbussystem muss gewährleisten, dass jedes gesendete Datenpaket innerhalb einer begrenzten garantierten Zeit beim Empfänger ankommt. LANs werden mit einem Netzwerkbetriebssystem und einem einheitlichen Netzwerkprotokoll betrieben. Bevorzugter Kommunikationsstandard ist dabei das Ethernet-Konzept. Das Ethernet-Konzept bietet nämlich die Möglichkeit der Nutzung von Standard-Hardware- und Software-Komponenten. Weiterhin zeichnet sich das Ethernet-Konzept durch eine einfache Vernetzungstechnologie bei gleichzeitig hoher Datenübertragungsrate aus.

Im OSI-Schichtmodell, dem internationalen Referenzmodell für Datenübertragung in Netzwerken, das auf einem Schichtenstapel mit sieben Schichten aufgebaut ist, wobei jede Schicht eine Menge von Protokollen definiert, die jeweils der nächst höheren Schicht ihre Dienste zur Verfügung stellt, ist das Internetprotokoll der 2. Schicht, der sog. Leitungsschicht zugeordnet. In dieser Leitungsschicht werden zu übermittelnden Daten zu Paketen gebündelt, denen spezifische Informationen für das jeweilige Kommunikationsprotokoll hinzugefügt werden. Die Leitungsschicht ist im Netzwerk für den Transport der Datenpakete von Steuerknoten zu Steuerknoten und für die Fehlererkennung zuständig. Im Ethernet-Konzept ist die Leitungsschicht in zwei Ebenen unterteilt, wobei die erste Ebene den Daten einen ersten Kopfabschnitt hinzufügt, der Informationen enthält, die für eine korrekte Datenübertragung vom Empfängerprotokoll benötigt werden. In der 2. Ebene wird dann das zu versendende Datenpaket mit einem weiteren Kopfabschnitt und einem Endabschnitt für den Transport der Datenpakete von Steuerknoten zu Steuerknoten eingekapselt. Mit solchen Ethernetpaketen, auch als Ethernet-Telegramme bezeichnet, lassen sich Daten mit einer Länge bis zu 1500 Bytes übertragen.

Um das Ethernet-Konzept auch in der Industrieautomation nutzen zu können, bei der Echtzeitfähigkeit gefordert ist, weist jeder Steuerknoten 1 eine für den Echtzeitbetrieb erweiterte Netzwerkanschaltung 11 auf. Die Netzwerkanschaltung 11 kann dabei sowohl hardware- als auch softwaretechnisch im Steuerknoten realisiert sein. Die Netzwerkanschaltung 11 im Steuerknoten 1 ermöglicht die parallele Nutzung des Bussystems 3 zur Ermittlung von Daten für Echtzeitanwendungen und für Nicht-Echtzeitanwendungen. Die Daten für Echtzeitanwendungen werden dabei von der Netzwerkanschaltung 11 priorisiert behandelt, sodass zuerst Echtzeitdaten übertragen werden und in der verbleibenden Zeit bis zur Übertragung der nächsten Echtzeitanwendungen dann die Daten für Nicht-Echtzeitanwendungen.

Für die Datenübertragung über das Bussystem 3 ist die Netzwerkanschaltung 11 der Steuerknoten 1 in ein Sende-Mödul 12 und ein Empfangs-Modul 13 unterteilt. Das Sende-Modul 12 verwaltet die zu verschickenden Daten in einem Ausgangsprozessabbild. Die Datenpakete werden z.B. in Form von Ethernet-Telegrammen verschickt. Das Sende-Modul 12 des Sender-Steuerknotens 1 setzt das Ausgangsprozessabbild gemäß dem Netzwerkprotokoll in ein Datenpaket um und gibt das Datenpaket dann zu einem vorgegebenen Zeitpunkt auf das Netzwerk aus. Das Empfangs-Modul 13 des Empfänger-Steuerknotens 1 - das Empfangs-Modul 13 kann für den Empfang von Datenpaketen, die von einem oder mehrerer Sende-Module 12 von weiteren Steuerknoten 1 ausgegeben werden, angemeldet sein- setzt dann das empfangene Datenpaket in ein Eingangsprozessabbild um, dass dann vom Steuerknoten 1 weiterverarbeitet werden kann.

Mit dieser Auslegung ist es möglich, die Kommunikationsbeziehungen zwischen den Steuerknoten im Netzwerk flexibel und auch während der Anlagenlaufzeit, d.h. dynamisch festzulegen und somit auf eine einfach Weise eine dezentrale Steuerung mit hoher Kompatibilität bezüglich der eingesetzten Apparate und Geräte zu erreichen. Änderungen im Produktions- und Fertigungsprozess, z.B. Produktionserweiterung oder Produktionswechsel lassen sich einfach durch Änderung der Kommunikationsbeziehungen, d.h. Neu-Festlegen der Sende-Empfangs-Modul-Relationen, die angeben, welcher Steuerknoten zu welchen weiteren Steuerknoten Daten übertragen müssen, ausführen.

Die Festlegung der Kommunikationsbeziehungen der Sende- und Empfangs-Module erfolgt vorzugsweise im Rahmen einer Initialisierungsphase mit Hilfe des Netzwerkkonfigurators 2. Der Netzwerkkonfigurator 2 weist dazu ein Erfassungsmodul 21, auf um die an das Netzwerk angeschlossenen Steuerknoten zu ermitteln. Das Erfassungsmodul 21 ist im Netzwerkkonfigurators 2 mit einem Konfigurationsmodul 22 verbunden, das die Kommunikationsbeziehungen der Sende- und Empfangs-Module 12, 13 der ermittelnden Steuerknoten 1 festlegt, d.h. welcher Steuerknoten sich mit seinem Empfangs-Modul bei welchem anderen Steuerknoten zum Empfang von Daten von dessen Sende-Modul anmelden soll. Das Konfigurationsmodul 22 ist wiederum mit einem Programmiermodul 23 verbunden, das die durch das Konfigurationsmodul festgelegten Kommunikationsbeziehungen zwischen den Steuerknoten im Netzwerk dann auf diese Steuerknoten überträgt.

Der Netzwerkkonfigurator 2 kann jedoch die Kommunikationsbeziehung zwischen den Steuerknoten bzw. den Teilnehmern im Steuerknoten auch nach der Initialisierungsphase dynamisch anpassen. Mit dieser Ausgestaltung kann auf einfach Weise auf Produktionserweiterung und Produktionswechsel reagiert werden. Der Netzwerkkonfigurator 2 ermöglicht es dann, durch einfache Umprogrammierung entsprechende Anpassungen der Kommunikationsbeziehungen zwischen den einzelnen Steuerknoten bzw. den Teilnehmern im Steuerknoten vorzunehmen.

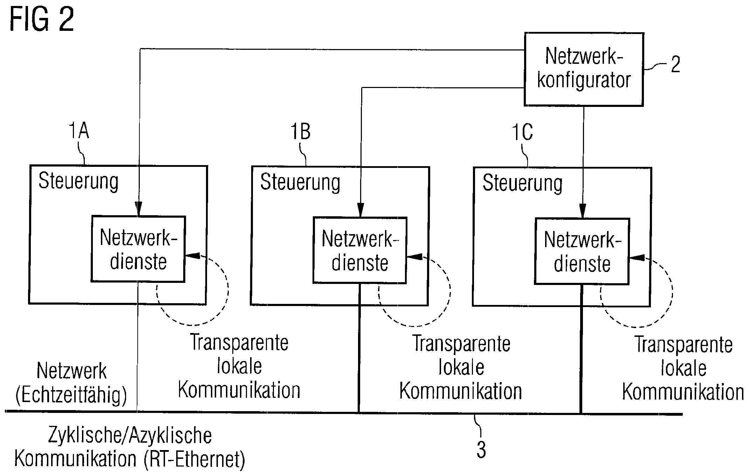

Die Initialisierungsphase der in Fig. 1 dargestellten dezentralen Steuerung ist in Fig. 2 im Detail gezeigt. Die Pfeile in der Figur zeigen dabei den durchgeführten Datenaustausch an. In einem ersten Schritt der Initialisierungsphase erfasst der Netzwerkkonfigurator 2 die am Netzwerk angeschlossenen Steuerknoten 1. Die Steuerknoten weisen hierzu eine eindeutige dem jeweiligen Steuerknoten zugeordnete Adresse auf, über die der Steuerknoten angesprochen werden kann. Der Steuerknoten kann diese Adresse z.B. beim Hochfahren am Bussystem über das Dynamic Configuration Protocol (DHCP) oder über Automatic IP beziehen. Die Adresse kann jedoch auch im Steuerknoten bereits voreingespeichert sein.

Zur automatischen Erkennung der Steuerknoten 1 der Netzwerkkonfigurator 2 verschiedene Mechanismen verwenden. Das Erfassungsmodul des Netzwerkkonfigurators 2 kann ein sog. Broadcast-Telegramm an alle Steuerknoten 1, die an das Netzwerk 3 angeschlossen sind, senden. Die Steuerknoten 1 antworten dann auf dieses Broadcast-Telegramm mit einem Antworttelegramm und geben dabei ihre gültige Adresse bekannt. Alternativ besteht auch die Möglichkeit, dass jeder Steuerknoten beim Hochfahren automatisch ein Identifizierungstelegramm mit seiner Adresse an das Erfassungsmodul des Netzwerkkonfigurators 2 sendet.

Parallel zur Adressenerfassung kann das Erfassungsmodul des Netzwerkkonfigurators 2 auch eine Gerätebeschreibung, die die Netzwerkeigenschaften und die Funktion des Steuerknoten charakterisiert, vom Steuerknoten abfragen, bzw. der Steuerknoten kann beim Hochfahren die Gerätebeschreibung automatisch an das Erfassungsmodul des Netzwerkkonfigurators übermitteln.

Auf der Grundlage der Anzahl der erfassten Steuerknoten sowie deren Geräteeigenschaften legt dann das Konfigurationsmodul des Netzwerkkonfigurators 2 die Kommunikationsbeziehungen zwischen den Steuerknoten am Netzwerk fest, d.h. welcher Steuerknoten sich mit seinem Empfangs-Modul bei welchem anderen Steuerknoten zum Empfang von Daten von dessen Sende-Modul anmelden soll. Das Konfigurationsmodul enthält dafür vorzugsweise ein Anlagenobjektmodell, das ein standardisierte Anlagendarstellung und Prozessbeschreibung enthält, die mit den Geräteeigenschaften der ermittelten Steuerknoten kombiniert werden, um die Kommunikationsbeziehungen zu definieren. Alternativ zu einer Eingabe der Gerätebeschreibung über die Steuerknoten kann die Gerätebeschreibung auch über eine externe Datenbank eingelesen werden oder auch direkt über eine Mensch-Maschine-Schnittstelle in den Netzwerkkonfigurator 2 eingegeben werden. Die Anlagendarstellung und die Prozessbeschreibung kann der Netzwerkkonfigurator z.B. von einem Engineering-System erhalten.

Die vom Netzwerkkonfigurator 2 festgelegten Kommunikationsbeziehungen zwischen den Steuerknoten 1 geben jeweils das Sende-Modul, das die Daten versendet, und das Empfangs-Modul, das die Daten empfängt, sowie die Datenübertragungsart und den Datentyp an. Die zu übertragenen Daten werden dabei in Ereignisdaten, Gerätedaten und Prozessdaten unterteilt. Ereignisdaten dienen z.B. dazu, Betriebsart und Betriebszustand der Steuerknoten festzulegen bzw. zu überwachen oder Gerätedaten, die keinen Echtzeitanforderungen unterliegen, zwischen Knoten zu übertragen. Solche Ereignisdaten können das Auftreten eines Fehlers, die Meldung des Betriebszustandes, die Änderung eines Prozesssignals, etc. sein. Gerätedaten können Kalibrierdaten, Prozess- und Produktparameter oder andere Daten sein. Die Ereignisdaten und die Gerätedaten werden zwischen den Steuerknoten in der Regel azyklisch ausgetauscht. Prozessdaten sind dagegen in der Regel Funktionsdaten, die für den Prozess- und Fertigungsablauf notwendig sind. Für die Echtzeitanwendung notwendige Prozessdaten werden zwischen den Steuerknoten zyklisch ausgetauscht, um eine definierte Datenübertragung zu garantieren. Nicht für Echtzeitübertragung notwendige Daten wie z.B. Prozess- und Produktparameter, d.h. Gerätedaten werden dagegen azyklisch zwischen den Steuerknoten übertragen.

Die Datensätze mit den Kommunikationsbeziehungen werden vom Programmiermodul des Netzwerkkonfigurators 2 über das Bussystem 3 in die Steuerknoten 1 eingeschrieben. Zusätzlich kann der Netzwerkkonfigurator 2 auf die Produkt- und Prozessparameter zur Durchführung des gewünschten Produktions- und Fertigungsprozesses auf die Steuerknoten übertragen. Nach Abschluss des Initialisierungsvorgangs wird die dezentrale Steuerung dann in den Maschinenbetrieb umgeschaltet, um den gewünschten Produktions- und Fertigungsprozess auszuführen. In diesem Betriebsmodus wird der Netzwerkkonfigurator 2 nicht mehr benötigt. Der Netzwerkkonfigurator 2 kann dann entweder abgeschaltet werden oder eine beobachtende Funktion beim Produktions- und Fertigungsprozess einnehmen, also z.B. eine Fehlerüberwachung und -Diagnose durchführen.

Die Steuerknoten tauschen während des Produktions- und Fertigungsprozesses gemäß der vom Netzwerkkonfigurator vorgegebenen Kommunikationsbeziehungen Prozess- und Ereignisdaten aus. Das Sende-Mödul des Sender-Steuerknotens kann dabei Daten in einer Punkt zu Punkt-Verbindung direkt an das Empfangs-Moduls des Empfänger-Steuerknotens schicken. Alternativ kann das Sende-Modul des Sender-Steuerknotens die Daten jedoch auch an die Empfangs-Module mehrerer Empfänger-Steuerknoten senden. Ferner besteht die Möglichkeit eines Versandes der Daten durch das Sende-Modul des Sender-Steuerknotens an die Empfangs-Module aller an das Netzwerk angeschlossenen Steuerknoten. Nicht-Echtzeitdaten werden dabei in der Regel azyklisch über Punkt zu Punkt-Verbindungen ausgetauscht. Solche Nicht-Echtzeitdaten sind Ereignisdaten oder Produkt- und Prozessparameter. Prozessdaten dagegen, die zur Ausführung von Echtzeitanwendungen erforderlich sind, werden zyklisch an alle Steuerknoten versandt. Bei Echtzeitdaten können Punkt zu Mehrpunkt-Verbindungen bzw. eine Broadcast-Übertragung ausgeführt werden.

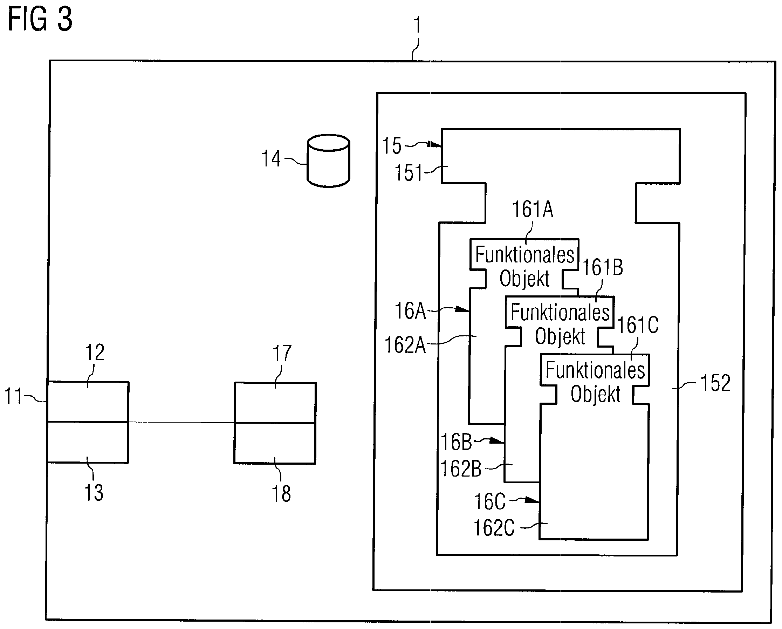

Fig.3 zeigt schematisch den möglichen Aufbau eines Steuerknotens. Jeder Steuerknoten weist neben der Netzwerkeinschaltung 11, die das Sende-Modul 12 und das Empfangs-Modul 13 enthält, eine Gerätebeschreibung auf, die die Funktions- und Kommunikationseigenschaften des Steuerknotens darstellt. Die Form dieser Gerätebeschreibung ist vorzugsweise für alle Steuerknoten standardisiert und als Datei in einem Speicherbereich 14 des Steuerknotens abgelegt. Die Gerätebeschreibung kann von übergeordneten Systemen oder auch, wie vorherstehend erläutert, vom Netzwerkkonfigurator abgerufen werden. Die Gerätebeschreibung kann auch von extern also wiederum durch den Netzwerkkonfigurator bzw. ein übergeordnetes System oder auch über eine Mensch-Maschinen-Schnittstelle verändert werden, um die Funktions- und Kommunikationseigenschaften des Steuerknotens an den aktuellen Status anzupassen.

Der Gerätebeschreibung des Steuerknotens, die die Hardware des Steuerknotens und seine Funktionen bzw. die Schnittstellen zur Außenwelt darstellt, ist im Steuerknoten ein Maschinenmodell 15 zugeordnet. Das Maschinenmodell 15 bildet die Geräteigenschaften in Form von Funktionalitäten nach und entkoppelt somit die Gerätefunktionalitäten von der realen Hardwaresteuerung. Mit Hilfe des Maschinenmodells lässt sich die Anlage bzw. innerhalb der Steuerknoten liegenden Funktionalitäten auf einfache und effektive Weise modularisieren und damit eine dezentrale Steuerung aufbauen. Das Maschinenmodell kapselt die Gerätefunktionalität und stellt somit autarke Moduleinheiten bereit, die für alle Geräte-, Kommunikations- und Funktionseinheiten jeweils einem einheitlichen abstrahierten Betriebsablauf folgend für sich selbst, also ohne Leitsystem betrieben werden können.

Das Maschinenmodell 15 ist dabei in eine Organisationseinheit 151 und eine Funktionseinheit 152 unterteilt. Die Organisationseinheit 151 legt den Zustand des Steuerknotens fest. Der Zustand des Steuerknotens gibt die Betriebsart an, d.h., ob die Maschine manuell, halbautomatisch oder automatisch betrieben wird, ob die Maschine sich im Initialisierungsmodus oder im Maschinenbetriebsmodus befindet. Ferner ist in der Organisationseinheit der Betriebszustand des Steuerknotens definiert. Betriebszustände können z.B. Anfahren, Stopp oder auch Fehlerbetrieb sein. Die Betriebszustände werden durch die Organisationseinheit 151 des Maschinenmodells 15 im Steuerknoten 1 eindeutig festgelegt und abgearbeitet. Weiterhin sorgt die Organisationseinheit 151 des Maschinenmodells 15 im Steuerknoten 1 dafür, dass die Übergänge zwischen den Betriebszuständen eindeutig sind. Die Organisationseinheit 151 stellt somit eine Zustandsmaschine da, die dafür sorgt, dass der gewünschte Zustand vom Steuerknoten auch ohne Zuhilfenahme äußerer Ereignisse erreicht wird.

In der Funktionseinheit 152 des Maschinenmodells 15 im Steuerknoten 1 sind die den jeweiligen Betriebszuständen zugeordnete Anwendungsprogramme enthalten, die je nach dem von der Organisationseinheit eingestellten Betriebszustand dann von der Funktionseinheit 152 angestoßen werden. Die Anwendungsprogramme in den Funktionseinheiten der Steuerknoten werden über individuelle Kennungen aufgerufen. Die Organisationseinheit 151 enthält dabei die Kennung und die Funktionsparameter der aufzurufenden Funktionseinheit 152 und führt den Aufruf aus. Eine Funktionseinheit stellt dabei eine elementare Funktion bereit, die von außen parametrisiert werden kann. Die Gesamtfunktionalität ergibt sich dann aus der Anordnung der Elementarfunktionen. Diese Elementarfunktionen können aus untergeordneten Elementarfunktionen zusammengesetzt werden und wiederum eine elementare Super-Funktion bilden.

Die Steuerknoten sind vorzugsweise in Teilnehmer 16A, 16B, 16C unterteilt, die einzeln für sich ansprechbare Funktionalitäten des Steuerknoten definieren. Die Unterteilung der Steuerknoten in Teilnehmer ist frei konfigurierbar und unabhängig von der realen Hardware-Steuerung. Die Teilnehmer sind wiederum analog dem Maschinenmodell in eine Organisationseinheit 161 zum Abarbeiten der Zustandsmaschine, welche Betriebsart und Betriebszustand festlegt, und eine Funktionseinheit 162 zum Ausführen des der jeweiligen Betriebsart und dem jeweiligen Betriebszustand zugeordneten Anwendungsprogramms unterteilt. Die Teilnehmer des Steuerknoten können dabei bezogen auf ihre Funktionen gleichwertig ausgestaltet oder auch hierarchisch organisiert sein. Insbesondere besteht die Möglichkeit, dass die Funktionalität eines Teilnehmers wiederum in mehrere Unterfunktionalitäten mit mehreren Subteilnehmern unterteilt ist, die analog dem übergeordneten Teilnehmern aufgebaut sind. Die Aufteilung der Steuerknoten in Teilnehmer sorgt für eine weitere Vereinfachung der Modularisierung, insbesondere in Bezug auf die erforderliche Festlegung der Kommunikationsbeziehungen. Die Teilnehmer bzw. die darin enthaltenen Funktionseinheiten 162 stellen funktional autarke Einheiten dar, die sich eigenständig konfigurieren und ansprechen lassen.

Mit der Unterteilung der Steuerknoten in Teilnehmer lässt sich ferner auch die Geschwindigkeit der Datenkommunikation optimieren. Bei einer Datenübertragung zwischen den Steuerknoten erfolgt die Datenübertragung gemäß dem Netzwerkprotokoll, also insbesondere dem Ethernet-Protokoll, wobei der sendende Steuerknoten mit seinem Sende-Modul das zu versendende Ausgangsprozessabbild in ein Netzwerkdatenpaket, also z.B. ein Ethernet-Telegramm, umsetzt und dann das Datenpaket zu einem vorgegebenen Zeitpunkt auf das Netzwerk ausgibt. Die Steuerknoten, die mit ihren Empfangs-Modulen auf dieses Sende-Modul angemeldet sind, setzen dann das empfangene Datenpaket wieder in ein Eingangsabbildprozess um. Wenn die Datenkommunikation dagegen intern in den Steuerknoten zwischen den Teilnehmern im Steuerknoten ausgeführt werden soll, erfolgt der Datenaustausch bevorzugt transparent durch Datenabbildungsvorgänge mit einem direkten Datenzugriff der Teilnehmer auf das zwischen den Teilnehmern übertragene SteuerknotenProzessabbild. Diese direkten Datenabbildungsvorgänge der Teilnehmer im Steuerknoten sorgen für einen schnellen Datenaustausch ohne aufwendige Umsetzvorgänge bzw. Transfervorgänge über die Sende- bzw. Empfangs-Module.

Die Datenübertragungsvorgänge, d.h. die direkte Datenabbildung zwischen den Teilnehmern und die Netzwerk-Protokollumsetzungen zwischen den Steuerknoten werden vorzugsweise durch den Netzwerkkonfigurator im Rahmen des vorher dargestellten Initialisierungsvorgangs vorgegeben. Die Kommunikationsbeziehungen zwischen den Teilnehmern im Steuerknoten werden dabei analog zu den Kommunikationsbeziehungen zwischen den Steuerknoten in Ereignis- , Parameter- und Prozessdatenströme unterteilt. Gleichzeitig wird auch die Art der Datenübertragung zwischen den Teilnehmern, d.h. ob die Datenübertragung zyklisch oder azyklisch durchgeführt werden soll, festgelegt.

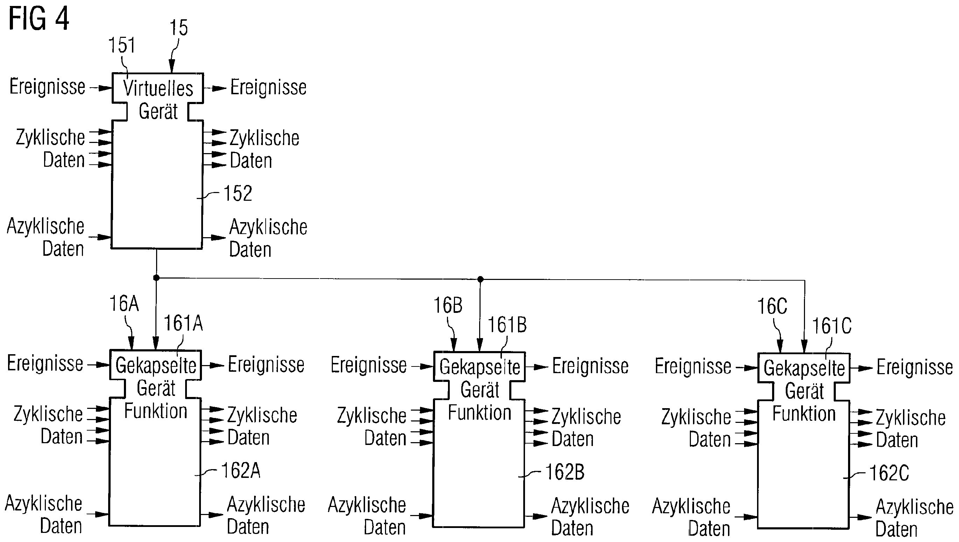

Figur 4 zeigt mögliche Datenströme bei dem in Fig. 3 gezeigten Steuerknoten 1 mit dem Maschinenmodell 15, das drei Teilnehmer 16, die jeweils eine Gerätefunktion kapseln, aufweist, wobei die Organisationseinheit die Schnittstelle zu den Ereignisdatenströmen und die Funktionseinheit die Schnittstelle zu den Prozessdatenströmen darstellt. Die Ereignisdatenströme übermitteln Informationen über die Betriebsart und werden vorzugsweise azyklisch ausgetauscht. Die Prozessdatenströme enthalten einerseits Prozessdaten, die zyklisch ausgetauscht werden, aber auch Produkt- und Prozessparameter oder weitere statistische Daten d.h. Gerätedaten, die azyklisch übertragen werden. Die Ereignis-, Parameter- und Prozessdatenströme zwischen den Teilnehmern im Steuerknoten können dabei von einem Teilnehmer zum nächsten Teilnehmer oder auch parallel auf mehrere oder alle Teilnehmer ausgeführt werden.

Zur Verarbeitung der Ereignis-, Parameter- und Prozessdatenströme erhalten die Steuerknoten jeweils ein Ereigniserfassungsmodul 17 und ein Datenerfassungsmodul 18, die, wie Fig. 3 zeigt, mit der Netzwerkanschaltung 11, die Sende-Modul 12 und Empfangs-Modul 13 enthält, verbunden sind. Ereignisse, d.h. Hinweise, Meldungen, Fehler im laufenden Maschinenbetrieb, etc. werden von dem Ereigniserfassungsmodul 17 klassifiziert und zwischengespeichert. Weitere, insbesondere übergeordnete Steuerknoten haben die Möglichkeit, diese zwischengespeicherten Ereignisse abzurufen. Die Ereignisse werden dabei in quittierpflichtige und nichtquittierpflichtige Ereignisse unterteilt. Quittierpflichtige Ereignisse müssen von einer autorisierten Stelle quittiert werden, bevor sie aus dem Ereigniserfassungsmodul 17 entfernt werden können. Das Datenerfassungsmodul 18 speichert die Prozessdaten und ermöglicht es weiteren, insbesondere übergeordneten Teilnehmern bzw. Steuerknoten diese Prozessdaten abzuholen.

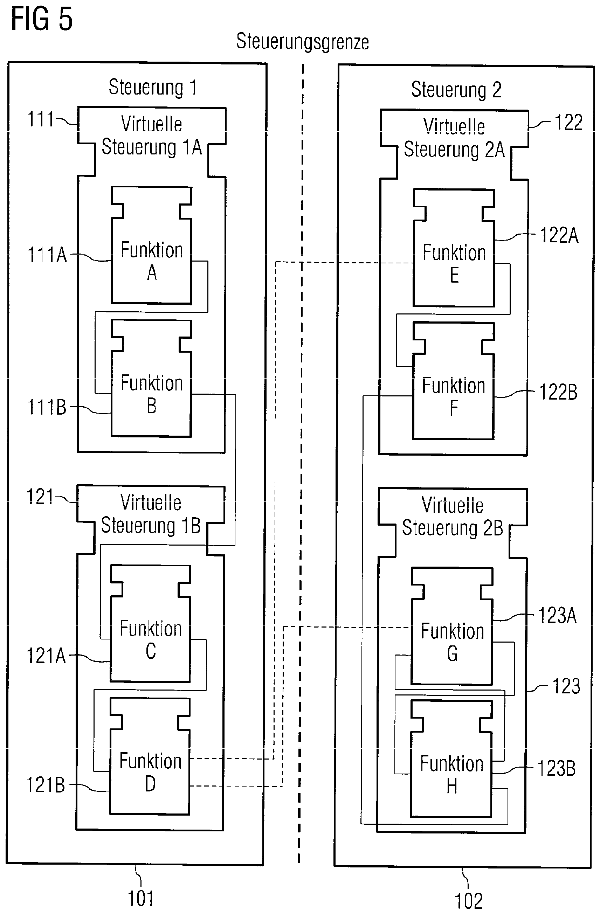

Figur 5 zeigt einen Ausschnitt einer dezentralen Steuerung mit zwei Steuerknoten 101, 102, deren Maschinenmodell jeweils in vier Teilnehmer 111, 121, 122, 123 mit getrennten Funktionalitäten untereilt sind. Jeder Teilnehmer umfasst wiederum zwei Subteilnehmer 111A, 111B, 121A, 121B, 122A, 122B, 123A 123B, die autarke Gerätefunktionen repräsentieren. In Figur 5 sind die Datenübertragungswege zwischen den Steuerknoten bzw. in den Steuerknoten zwischen den Teilnehmer bzw. Subteilnehmer eingezeichnet. Die Datenübertragung in jedem Steuerknoten erfolgt dabei in Form von Datenabbildungsvorgängen, wodurch sich ein effektiver schneller Datenaustausch erreichen lässt. Die Datenübertragung zwischen den Steuerknoten wird in Form von Netzwerktelegrammen, in die die Prozessabbilder umgesetzt werden, durchgeführt.

Der Datenübertragungsweg beginnt dabei am Steuerknoten 101 und zwar im Teilnehmer 111 und hier im Subteilnehmer 111A, und geht von dort weiter zum Subteilnehmer 111B. Vom Subteilnehmer 111B des Teilnehmers 111 führt der Datenübertragungsweg dann auf die Subteilnehmer 121A des Teilnehmers 121 und von dort dann auf die Subteilnehmer 121B im Teilnehmer 121. Ein weiterer Datenaustausch erfolgt dann über Steuerknotengrenzen hinweg vom Subteilnehmer 121B im Teilnehmer 121 des Steuerknotens 101 zu dem Subteilnehmer 122A des Teilnehmers 122 und dem Subteilnehmer 123A des Teilnehmers 123 des Steuerknotens 2. Dieser Datenaustausch erfolgt gemäß dem Netzwerkprotokoll über die Sende-Empfangs-Module der Steuerknoten, wobei das Sende-Modul das Ausgangsprozessbild des Subteilnehmers 121B in Datenpakete umsetzt und zum Empfangs-Modul des Steuerknotens 2 schickt, der die Datenpakete wiederum in eine Eingangsprozessbild umsetzt und an den Subteilnehmer 122A im Teilnehmer 122 und den Subteilnehmer 123A im Teilnehmer 123 übergibt. Die Datenübertragung im Steuerknoten 102 erfolgt dann vom Subteilnehmer 122A auf den Subteilnehmer 122B des Teilnehmers 122 und von dort auf den Subteilnehmer 123B des Teilnehmers 123 und weiter auf den Subteilnehmer 123A des Teilnehmers 123. Gleichzeitig erfolgt auch eine Datenübertragung ausgehend vom Subteilnehmer 123A des Teilnehmers 123 auf den Subteilnehmer 123B des Teilnehmers 123.

## Patentansprüche

1. Steuerknoten für ein Netzwerk aus Steuerknoten,
wobei die Datenübertragung zwischen den Steuerknoten im Netzwerk in Form von Datenpaketen erfolgt,
wobei der Steuerknoten ein Sende-Modul (12) aufweist, das ausgelegt ist, die zu verschickenden Daten in einem Ausgangsprozessabbild zu verwalten, das Ausgangsprozessabbild in ein Datenpaket umzusetzen und das Datenpaket zu einem vorgegebenen Zeitpunkt auf das Netzwerk auszugeben, und
wobei der Steuerknoten ein Empfangs-Modul (13) aufweist, das ausgelegt ist, sich für die Datenpakete eines oder mehrerer Sende-Module von weiteren Steuerknoten anzumelden und ein empfangendes Datenpaket in ein Eingangsprozessabbild umzusetzen,
**dadurch gekennzeichnet,**
**dass** ein Maschinenmodell (15) Geräteigenschaften des Steuerknotens in Form von Funktionalitäten nachbildet, die frei konfigurierbar und unabhängig von einer realen Hardwaresteuerung sind, wobei das Maschinenmodell die Funktionalität kapselt und als autarke Moduleinheiten bereit stellt, die jeweils einem einheitlichen abstrahierten Betriebsablauf folgend für sich selbst, also ohne Leitsystem betrieben werden können, und
**dass** der Steuerknoten in Teilnehmer (16A, 16B, 16C) unterteilt ist, wobei die Teilnehmer den Moduleinheiten des Maschinenmodells zugeordnet sind und funktional autarke Einheiten darstellen, die einzeln für sich ansprechbare Funktionalitäten des Steuerknoten definieren, wobei eine Datenübertragung zwischen den Teilnehmern (16A, 16B, 16C) innerhalb des Steuerknotens in Form eines Datenabbildungsvorganges durchgeführt wird.

2. Steuerknoten nach Anspruch 1, wobei das Empfangs-Modul (13) ausgelegt ist, den empfangenen Datenpaketen ein Qualitätsdatum zu zuordnen, das das Alter des Datenpaketes angezeigt.

3. Steuerknoten nach Anspruch 1 oder 2, wobei das Sende-Modul (12) ausgelegt ist, das Datenpaket an einen oder mehrere weitere Steuerknoten direkt zu adressieren.

4. Steuerknoten nach Anspruch 3, wobei das Sende-Modul (12) ausgelegt ist, Nicht-Echtzeitdaten azyklisch an einen oder mehrere weitere Steuerknoten direkt zu versenden.

5. Steuerknoten nach einem der Ansprüche 1 bis 4, wobei das Sende-Modul (12) ausgelegt ist, das Datenpaket an alle am Netzwerk vorhandenen Steuerknoten weiterzuleiten.

6. Steuerknoten nach Anspruch 5, wobei das Sende-Modul (12) ausgelegt ist, Echtzeitdaten zyklisch an alle am Netzwerk vorhandenen Steuerknoten zu versenden.

7. Steuerknoten nach einem der Ansprüche 1 bis 6, wobei jeder Teilnehmer (16) eine Organisationseinheit (161) zum Abarbeiten einer Zustandsmaschine, die Betriebsart und Betriebszustand festlegt, und eine Funktionseinheit (162) zum Ausführen des für die jeweilige aktuelle Betriebsart und für den jeweiligen aktuellen Betriebszustand relevanten Anwendungsprogramms aufweist.

8. Steuerknoten nach einem der Ansprüche 1 bis 7, umfassend ein Ereigniserfassungseinheit (17), die ausgelegt ist, Ereignisse zu klassifizieren und zwischenzuspeichern, und ein Datenerfassungseinheit (18), die ausgelegt ist, Daten zwischenzuspeichern.

9. Steuerknoten nach einem der Ansprüche 1 bis 8, umfassend eine Ein-/Ausgabe-Einheit (11), die ausgelegt ist, Ein-/Ausgabe-Variablen als lokale Variablen mit Platzhalter-Adressen zu definieren, die konfigurierbar sind.

10. Anlage, die ein Netzwerk mit Steuerknoten (1) nach einem der Ansprüche 1 bis 9 und einen Netzwerkkonfigurator (2) umfasst, wobei der Netzwerkkonfigurator ausgelegt ist, die Kommunikationsbeziehungen zwischen den Steuerknoten bzw. zwischen den Teilnehmern im Steuerknoten festzulegen.

11. Anlage nach Anspruch 10, wobei ein Erfassungsmodul (21) des Netzwerkkonfigurators (2) zum Ermitteln der an die Anlage angeschlossenen Steuerknoten (1) ein Broadcast-Telegramm im angeschlossenen Netzwerk (3) verschickt, auf das die an das Netzwerk angeschlossenen Steuerknoten mit einem Identifizierungstelegramm antworten.

12. Anlage nach Anspruch 11, wobei jeder Steuerknoten (1) beim Hochfahren ein Identifizierungstelegramm an das Erfassungsmodul (21) des Netzwerkkonfigurators (2) schickt.

13. Anlage nach einem der Ansprüche 10 bis 12, wobei jeder Steuerknoten (1) über eine gültige Adresse verfügen, die fest vorgegeben ist oder per DHCP oder per AUTO-IP bezogen werden kann und an den Netzwerkkonfigurator (2) übermittelt wird.

14. Anlage nach einem der Ansprüche 10 bis 13, wobei der Netzwerkkonfigurator (2) ausgelegt ist, Ereignis- und Prozessdatenströme zwischen den Steuerknoten (1) im Netzwerk (3) festzulegen, und wobei die Steuerknoten ausgelegt sind, netzwerkweites Mapping durch Umsetzen eines Steuerknoten-Prozessabbildes durchzuführen.

15. Anlage nach einem der Ansprüche 10 bis 14, wobei der Netzwerkkonfigurator (2) ausgelegt ist, Ereignis- und Prozessdatenströme zwischen Teilnehmern (16) im Steuerknoten (1) in Form eines Steuerknoten-Prozessabbildes festzulegen, und wobei die Teilnehmer im Steuerknoten ausgelegt sind, ein lokales Mapping durch Datenaustausch mit dem Prozessabbildes durchzuführen.

## Claims

1. Control node for a network of control nodes, wherein data are transmitted between the control nodes in the network in the form of data packets,
wherein the control node has a transmitting module (12) which is designed to manage the data to be sent in an output process image, to convert the output process image into a data packet and to output the data packet to the network at a predefined time, and
wherein the control node has a receiving module (13) which is designed to register for the data packets from one or more transmitting modules of further control nodes and to convert a received data packet into an input process image,
**characterized**
**in that** a machine model (15) simulates device properties of the control node in the form of functionalities which are freely configurable and are independent of real hardware control, wherein the machine model encapsulates the functionality and provides it as autonomous module units which can each be operated per se, that is to say without a control system, in a manner following a unified abstracted operating sequence, and
**in that** the control node is subdivided into subscribers (16A, 16B, 16C), wherein the subscribers are assigned to the module units of the machine model and constitute functionally autonomous units which individually per se define addressable functionalities of the control node, wherein data are transmitted between the subscribers (16A, 16B, 16C) inside the control node in the form of a data mapping process.

2. Control node according to Claim 1, wherein the receiving module (13) is designed to assign a quality date indicating the age of the data packet to the received data packets.

3. Control node according to Claim 1 or 2, wherein the transmitting module (12) is designed to directly address the data packet to one or more further control nodes.

4. Control node according to Claim 3, wherein the transmitting module (12) is designed to directly send non-real-time data acyclically to one or more further control nodes.

5. Control node according to any one of Claims 1 to 4, wherein the transmitting module (12) is designed to forward the data packet to all control nodes present in the network.

6. Control node according to Claim 5, wherein the transmitting module (12) is designed to send real-time data cyclically to all control nodes present in the network.

7. Control node according to any one of Claims 1 to 6, wherein each subscriber (16) has an organizational unit (161) for processing a state machine, which determines the operating mode and operating state, and a functional unit (162) for executing the application program relevant to the respective current operating mode and to the respective current operating state.

8. Control node according to any one of Claims 1 to 7, comprising an event capture unit (17), which is designed to classify and buffer events, and a data capture unit (18), which is designed to buffer data.

9. Control node according to any one of Claims 1 to 8, comprising an input/output unit (11), which is designed to define input/output variables as local variables with wildcard addresses which are configurable.

10. System comprising a network having control nodes (1) according to any one of Claims 1 to 9 and a network configurator (2), wherein the network configurator is designed to define the communication relationships between the control nodes or between the subscribers in the control node.

11. System according to Claim 10, wherein, in order to determine the control nodes (1) connected to the system, a capture module (21) of the network configurator (2) sends a broadcast message in the connected network (3), to which the control nodes connected to the network respond with an identification message.

12. System according to Claim 11, wherein each control node (1) sends an identification message to the capture module (21) of the network configurator (2) during start-up.

13. System according to any one of Claims 10 to 12, wherein each control node (1) has a valid address which is permanently predefined or can be obtained by DHCP or by AUTO-IP and is transmitted to the network configurator (2).

14. System according to any one of Claims 10 to 13, wherein the network configurator (2) is designed to define event and process data streams between the control nodes (1) in the network (3), and wherein the control nodes are designed to carry out network-wide mapping by converting a control node process image.

15. System according to one of Claims 10 to 14, wherein the network configurator (2) is designed to define event and process data streams between subscribers (16) in the control node (1) in the form of a control node process image, and wherein the subscribers in the control node are designed to carry out local mapping by interchanging data with the process image.

## Revendications

1. Noeud de commande pour réseau constitué de noeuds de commande, le transfert de données entre les noeuds de commande du réseau s'effectuant sous la forme de paquets de données,
le noeud de commande présentant un module d'émission (12) conçu pour administrer les données à délivrer sous la forme d'une représentation de processus de sortie, pour convertir la représentation de processus de sortie en un paquet de données et pour délivrer le paquet de données sur le réseau à un instant prédéterminé et
le noeud de commande présentant un module de réception (13) conçu pour demander des paquets de données d'un ou plusieurs modules d'émission d'autres noeuds de commande et pour convertir un paquet de données reçu en une représentation de processus d'entrée,
**caractérisé en ce que**
un modèle (15) de machine représente les propriétés d'appareil du noeud de commande sous la forme de fonctionnalités configurables librement et indépendantes d'une commande électronique réelle, le modèle de machine intégrant la fonctionnalité et la mettant à disposition sous la forme d'unités modulaires autonomes qui peuvent être utilisées intrinsèquement et sans système de conduite en suivant un déroulement unitaire abstrait et
**en ce que** le noeud de commande est divisé en participants (16A, 16B, 16C), les participants étant associés aux unités modulaires du modèle de machine et représentant des unités fonctionnellement autonomes qui définissent chacune des fonctionnalités utilisables du noeud de commande, un transfert de données entre les participants (16A, 16B, 16C) étant réalisé à l'intérieur du noeud de commande sous la forme d'une opération de représentation de données.

2. Noeud de commande selon la revendication 1, dans lequel le module de réception (13) est conçu pour associer aux paquets de données reçus une donnée de qualité qui indique l'âge du paquet de données.

3. Noeud de commande selon les revendications 1 ou 2, dans lequel le module d'émission (12) est conçu pour adresser directement le paquet de données à un ou plusieurs autres noeuds de commande.

4. Noeud de commande selon la revendication 3, dans lequel le module d'émission (12) est conçu pour envoyer directement des données non en temps réel et de manière acyclique à un ou plusieurs autres noeuds de commande.

5. Noeud de commande selon l'une des revendications 1 à 4, dans lequel le module d'émission (12) est conçu pour transmettre le paquet de données à tous les noeuds de commande présents dans le réseau.

6. Noeud de commande selon la revendication 5, dans lequel le module d'émission (12) est conçu pour envoyer les données en temps réel et cycliquement à tous les noeuds de commande présents dans le réseau.

7. Noeud de commande selon l'une des revendications 1 à 6, dans lequel chaque participant (16) présente une unité d'organisation (161) qui traite une machine d'état, qui définit le mode de fonctionnement et l'état de fonctionnement, et une unité fonctionnelle (162) qui exécute le programme d'application concerné dans le mode de fonctionnement particulier en cours et l'état de fonctionnement particulier en cours.

8. Noeud de commande selon l'une des revendications 1 à 7, comprenant une unité (17) de saisie d'événement conçue pour classer et conserver temporairement des événements, et une unité (18) de saisie de données conçue pour conserver temporairement des données.

9. Noeud de commande selon l'une des revendications 1 à 8, comprenant une unité d'entrée/sortie (11) conçue pour définir des variables d'entrée/sortie sous la forme de variables locales avec des adresses de positionnement qui sont configurables.

10. Installation qui comporte un réseau doté de noeuds de réseau (1) selon l'une des revendications 1 à 9 et d'un configureur de réseau (2), le configureur de réseau étant conçu pour définir les conditions de communication entre les noeuds de commande ou entre les participants présents dans les noeuds de commande.

11. Installation selon la revendication 10, dans laquelle un module de saisie (21) du configureur de réseau (2) envoie un télégramme de diffusion dans le réseau (3) raccordé sur lequel les noeuds de commande raccordés au réseau répondent par un télégramme d'identification, pour déterminer les noeuds de commande (1) raccordés à l'installation.

12. Installation selon la revendication 11, dans laquelle chaque noeud de commande (1) envoie un télégramme d'identification au module de saisie (21) du configureur de réseau (2) lorsqu'il est activé.

13. Installation selon l'une des revendications 10 à 12, dans laquelle chaque noeud de commande (1) dispose d'une adresse valide prédéfinie de manière fixe ou pouvant être appelée par DHCP ou par AUTO-IP, et qui est transmise au configureur de réseau (2).

14. Installation selon l'une des revendications 10 à 13, dans laquelle le configureur de réseau (2) est conçu pour définir les flux de données d'événements et de processus entre les noeuds de commande (1) du réseau (3), les noeuds de commande étant conçus pour exécuter une cartographie de tout le réseau par conversion d'une représentation de processus des noeuds de commande.

15. Installation selon l'une des revendications 10 à 14, dans laquelle le configureur de réseau (2) est conçu pour définir les flux de données d'événements et de processus entre les participants (16) du noeud de commande (1) sous la forme d'une représentation de processus des noeuds de commande et dans laquelle les participants du noeud de commande sont conçus pour exécuter une cartographie locale par échange de données avec la représentation de processus.
